# EUROPÄISCHE PATENTSCHRIFT

(11) **EP 3 388 268 B1**
(45) Veröffentlichungstag und Bekanntmachung des Hinweises auf die Patenterteilung: **12.02.2020**
(21) Anmeldenummer: 18166119.0
(22) Anmeldetag: 06.04.2018
(51) Int. Cl.: B60J 7/20

(54) **CABRIOLET-FAHRZEUG MIT EINEM NIEDERHALTER FÜR EIN ABGELEGTES VERDECK**
CONVERTIBLE VEHICLE WITH A RETAINING ELEMENT FOR A PLACED SOFT TOP
VÉHICULE CABRIOLET DOTÉ D'UN DISPOSITIF DE MAINTIEN POUR UNE CAPOTE RABATTU

(30) Priorität: 12.04.2017 DE 102017107946
(43) Veröffentlichungstag der Anmeldung: 17.10.2018
(73) Patentinhaber: Valmet Automotive Oy, 23500 Uusikaupunki (FI)
(72) Erfinder: Wesselmann, Mark, 49509 Recke (DE); Wiewel, Frank, 48480 Spelle (DE); Schmitz, Olaf, 49201 Dissen (DE)
(74) Vertreter: Kronthaler, Wolfgang N.K.

(56) Entgegenhaltungen:
- EP-A1- 1 925 485
- FR-A1- 2 910 386

## Beschreibung

Die Erfindung betrifft ein Cabriolet-Fahrzeug gemäß der im Oberbegriff des Patentanspruches 1 näher definierten Art. Stand der Technik Dokument EP 1 925 485 offenbart einen Niederhalter mit reibungsreduzierender Beschichtung.

Aus der DE 10 2004 010 628 A1 ist ein Cabriolet mit einem im hinteren Fahrzeugbereich ablegbaren Dach bekannt, das in vollständig geöffneter Stellung unterhalb eines geschlossenen Verdeckkastendeckels gehalten und mit dessen Hilfe in seiner Lage fixierbar ist, wobei hierfür dem Verdeckkastendeckel zumindest ein Niederhalter zugeordnet ist, der bei geschlossenem Verdeckkastendeckel eine abwärtsweisende und in der Länge veränderbare Erstreckungskomponente aufweist. Hierdurch sollen insbesondere Toleranzen aus der Rohbaufertigung ausgeglichen werden können.

Bei Verdecken ist es allgemein bekannt, diese in geöffnetem Zustand in einem Verdeckkasten durch einen Verdeckkastendeckel mit derartigen Niederhaltern niederzuhalten. Aufgrund von Relativbewegungen zwischen dem Niederhalter und dem abgelegten Verdeck beim Fahrbetrieb des Cabriolets, kann es insbesondere an den Berührungspunkten zwischen dem Niederhalter und einem Verdeckbezug des Verdecks zu einem Scheuern an dem Verdeckbezug und damit zu einer optischen Beeinträchtigung sowie Verkürzung der Lebensdauer des Verdecks kommen.

Um dies zu vermeiden, ist es aus der DE 198 13 347 C2 bekannt, einen schwingungsdämpfenden Niederhalter mit hoher Verschleißfestigkeit und geringem Oberflächenabrieb zu verwenden, wobei der Niederhalter ein Formteil mit einem elastomeren Kunststoff, thermoplastischen Kunststoff, Naturkautschuk und/oder Mischungen derselben ist.

Des Weiteren offenbart die EP 1 925 485 B1 ein Cabriolet mit einem im hinteren Bereich des Cabriolets ablegbaren Verdeck, das in vollständig geöffneter Stellung in einem Verdeckkasten aufgenommen und dabei von einem Verdeckkastendeckel mit hieran angeordneten Niederhaltern niedergehalten und fixiert ist. Die starr an dem Verdeck angeordneten Niederhalter weisen auf der dem Verdeck zugewandten Seite eine reibungsreduzierende Beschichtung auf, welche durch eine an dem jeweiligen Niederhalter befestigte Folie aus Kunststoff gebildet wird.

Es ist Aufgabe der vorliegenden Erfindung ein Cabriolet-Fahrzeug der eingangs genannten Art im Hinblick auf eine Reduktion der Reibung zwischen einem Niederhalter und einem Verdeckstoff zu verbessern.

Diese Aufgabe wird mit einem Cabriolet-Fahrzeug gemäß den Merkmalen des Patentanspruches 1 gelöst.

Es wird ein Cabriolet-Fahrzeug mit einem in einem hinteren Bereich des Cabriolet-Fahrzeugs ablegbaren Verdeck mit einem Verdeckbezug vorgeschlagen, das in vollständig geöffneter Stellung in einem Verdeckkasten aufgenommen ist und hierbei von einem Verdeckkastendeckel niedergehalten und in dieser niedergehaltenen Lage fixiert ist, wobei dem Verdeckkastendeckel wenigstens ein auf das Verdeck auflegbarer Niederhalter zugeordnet ist.

Erfindungsgemäß ist vorgesehen, dass der Niederhalter ein komprimierbares Kissen aufweist, welches gegenüber dem Verdeckkastendeckel definiert festlegbar ist und auf einer dem Verdeck zugewandten Seite von einer Textilschicht überspannt ist, welche verdeckkastendeckelseitig mit einem seitlichen Abstand zu dem Kissen festgelegt ist, wobei zwischen dem Kissen und der Textilschicht ein geringerer Reibungskoeffizient als zwischen der Textilschicht und dem Verdeckbezug vorliegt.

Die Begriffe "Verdeckkasten" und "Verdeckkastendeckel" sind dabei in einem weiten Sinne als jeglicher heckseitiger Ablageraum, der beispielsweise bei geschlossenem Verdeck auch als Gepäckablageraum nutzbar ist, und als heckseitiger Deckel, der auch als Kofferraumdeckel dienen kann und auch Verkleidungsteile zum Fahrzeuginneren hin umfassen kann, auszulegen.

Die erfindungsgemäße Lösung hat den Vorteil, dass insbesondere bei einer Fahrt des Cabriolet-Fahrzeugs mit offenem Verdeck zwischen dem Verdeck und dem Verdeckkastendeckel auftretende Relativbewegungen nicht zu einer Relativbewegung zwischen der Textilschicht und dem Verdeckbezug führen, sondern diese dabei möglichst unbewegt zueinander verbleiben. Die Relativbewegungen zwischen dem Verdeckkastendeckel und dem Verdeck führen aufgrund der Reibungskoeffizienten lediglich zu einer Bewegung zwischen dem Kissen und der dieses umgebenden Textilschicht.

Hierdurch treten vorteilhafterweise keine unerwünschten Oberflächenbeeinträchtigungen, wie z. B. ein Aufscheuern oder Abdrücke, an dem Verdeckbezug in den Bereichen auf, in denen der Verdeckbezug bei abgelegtem Verdeck mit dem Niederhalter oder den Niederhaltern zusammenwirkt.

Bei einer vorteilhaften Ausführung der Erfindung ist die Textilschicht an zwei gegenüberliegenden Seiten des Kissens mit einem eine Relativbewegung zwischen dem Kissen und der Textilschicht ermöglichenden Abstand, insbesondere von jeweils kleiner 5 cm, zu dem Kissen verdeckkastendeckelseitig festgelegt. Hierdurch ist eine Relativbewegung des abgelegten Verdecks gegenüber dem Verdeckkastendeckel je nach Anordnung insbesondere in Fahrzeuglängsrichtung und/oder Fahrzeugquerrichtung auf einfache und besonders effektive Weise durch den Niederhalter ausgleichbar, wobei die Textilschicht nicht oder nahezu unbeweglich an dem Verdeckbezug anliegt.

Der Niederhalter kann auf einfache Weise als vorgefertigtes Modul ausgeführt sein, wenn der Niederhalter einen Träger für das Kissen und die Textilschicht, welche hieran befestigt sind, aufweist.

Der Träger ist vorzugsweise mit textilem Gewebe, insbesondere mit einem vergleichbaren Gewebe wie die Textilschicht und/oder der Verdeckbezug bzw. eine der Textilschicht zugewandte Lage des Verdeckbezugs, ausgeführt.

Ein Austausch des Niederhalters kann bei einer vorteilhaften Ausführung des erfindungsgemäßen Cabriolet-Fahrzeugs auf einfache Weise durchgeführt werden, wenn der Träger reversibel, insbesondere mittels eines Klettverschlusses, eines Druckknopfverschlusses, eines Clip-Verschlusses oder dergleichen, an dem Verdeckkastendeckel festlegbar ist.

Sowohl das Kissen als auch die Textilschicht können jeweils mittels wenigstens einer Naht, einer Klebeverbindung oder einer sonstigen vergleichbar stabilen Verbindung an dem Träger befestigt sein.

Eine durch einen geringen Reibungskoeffizienten gekennzeichnete Werkstoffpaarung zwischen dem Kissen und der Textilschicht kann insbesondere erzielt werden, wenn das Kissen zumindest auf der der Textilschicht zugewandten Seite eine reibungsreduzierende Oberfläche aufweist. Dies kann durch einen glatten Kunststoffbezug oder eine Kunststoffbeschichtung bzw. Gleitfolie realisiert werden.

Um bei einem Zusammenwirken der Textilschicht mit dem Verdeckbezug möglichst geringe oder keine Abnutzungs- und Abdruckerscheinungen bei dem Verdeckbezug zu verursachen, ist es vorteilhaft, wenn die Textilschicht und zumindest die dieser zugewandte Seite des Verdeckbezugs aus wenigstens annähernd dem gleichen Material gebildet sind. In Versuchen hat es sich gezeigt, dass insbesondere die Materialpaarung Verdeckbezug gegen Verdeckbezug die geringsten optischen Abdruckerscheinungen zur Folge hat, weshalb die Gestaltung der das Kissen verkleidenden Textilschicht des Niederhalters aus Verdeckbezugsstoff bevorzugt wird.

Unerwünschte Bewegungen des abgelegten Verdecks gegenüber dem Verdecckastendeckel sind auf konstruktiv einfache Weise reduzierbar, wenn das Kissen im abgelegten Zustand des Verdecks eine Überdrückung erfährt, d. h. gegenüber einem unbelasteten Zustand zusammengedrückt ist.

Bei einer einfachen und kostengünstigen Ausführung des erfindungsgemäßen Cabriolet-Fahrzeugs kann lediglich in einem fahrzeugmittigen Bereich genau ein Niederhalter angeordnet sein.

Für eine zuverlässige Fixierung des Verdecks im Verdeckablageraum können auch wenigstens zwei in Fahrzeugquerrichtung voneinander beabstandet angeordnete Niederhalter an dem Verdeckkastendeckel vorgesehen sein, wobei die Niederhalter beispielsweise bei abgelegtem Verdeck mit Eckbereichen einer Dachspitze zusammenwirken.

Alternativ hierzu kann auch ein sich im Wesentlichen über die gesamte Fahrzeugquerrichtung des Verdeckkastendeckels erstreckender Niederhalter vorgesehen sein.

Sowohl die in den Patentansprüchen angegebenen Merkmale als auch die in den nachfolgenden Ausführungsbeispielen des erfindungsgemäßen Cabriolet-Fahrzeugs angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Cabriolet-Fahrzeugs ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfachte, dreidimensionale Ansicht eines Cabriolet-Fahrzeugs mit einem in geschlossener Position gezeigten Verdeck; und
- Fig. 2: eine Prinzipskizze mit einem vereinfachten Längsschnitt durch einen Teilbereich des Verdecks des Cabriolet-Fahrzeugs gemäß Fig. 1 in einer offenen Position, wobei ein Zusammenwirken eines Niederhalters mit einem Verdeckkastendeckel und dem Verdeck näher ersichtlich ist.

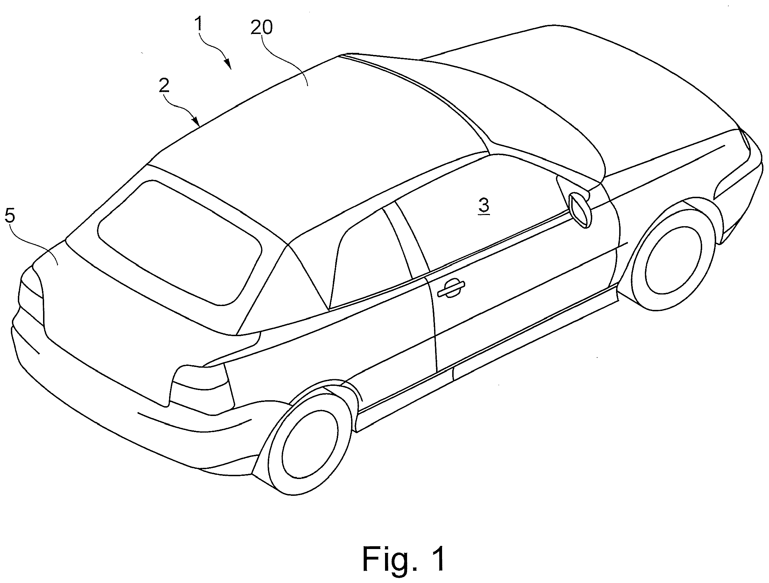

Die Fig. 1 zeigt ein Cabriolet-Fahrzeug 1 mit einem Verdeck 2, welches vorliegend als Soft-Top-Verdeck mit einem Verdeckbezug 20 ausgebildet ist. Das Verdeck kann bei einer alternativen Ausführung der Erfindung auch als zumindest teilweise von einem Verdeckbezug überspanntes Hard-Top-Verdeck ausgeführt sein.

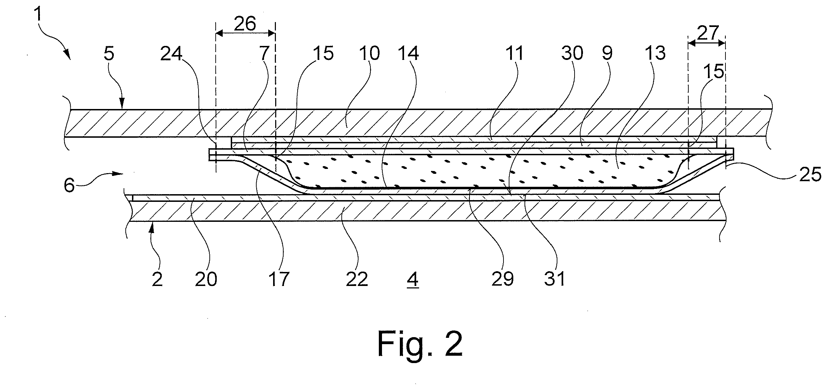

Das Verdeck 2 ist zwischen der in Fig. 1 gezeigten geschlossenen Position, in der das Verdeck 2 einen Fahrgastraum 3 überspannt, und einer in Fig. 2 ausschnittsweise gezeigten, in einem hinteren Bereich des Cabriolet-Fahrzeugs 1 in einem heckseitigen Verdeckkasten 4 verstauten, offenen Position verlagerbar, in welcher der Fahrgastraum 3 zumindest teilweise freigegeben ist.

In der offenen Position ist das in dem Verdeckkasten 4 angeordnete Verdeck 2 von oben von einem Verdeckkastendeckel 5 abgedeckt, wobei das abgelegte Verdeck 2 hierbei von dem Verdeckkastendeckel 5 niedergehalten wird und in der niedergehaltenen Position fixiert ist. Zum Niederhalten des Verdecks 2 in seiner Ablagestellung ist wenigstens ein in Fig. 2 näher ersichtlicher Niederhalter 6 vorgesehen, der bei einer Z-artigen Ablagebewegung des Verdecks 2 insbesondere mit einer Dachspitze 22 des Verdecks 2 bzw. dem Bereich des Verdeckbezugs 20, der die Dachspitze 22 überspannt, zusammenwirkt.

Vorzugsweise sind zwei oder mehr Niederhalter 6 vorgesehen, die in Fahrzeugquerrichtung jeweils beabstandet zueinander angeordnet sind.

Der als separate Baugruppe fertigbare Niederhalter 6 weist hier einen mit textilem Gewebe ausgeführten Träger 7 auf, der auf einer Seite vorliegend mit einem ersten Klettband 9 eines Klettverschlusses 8 verbunden ist. An dem Verdeckkastendeckel 5 bzw. an einem fest mit dem Verdeckkastendeckel 5 verbundenen Verkleidungsteil 10 ist ein zweites Klettband 11 des Klettverschlusses 8 angeordnet, so dass der Träger 7 des Niederhalters 6 und somit der gesamte Niederhalter 6 auf einfache Weise reversibel an dem Verdeckkastendeckel 5 anbringbar und fixierbar ist.

Der Niederhalter 6 weist weiterhin ein insbesondere mit einer rechteckigen Form ausgeführtes Kissen 13 auf, das vorliegend mit einem komprimierbaren Material ausgeführt ist. Als Material für das Kissen 13 kann beispielsweise ein schwingungsdämpfender Kunststoff, insbesondere ein Schaumstoff, zum Einsatz kommen. Das Kissen 13 ist in abgelegter Verdeckposition gegenüber einem unbelasteten Zustand zusammengedrückt. Weiterhin weist das Kissen 13 hier auf einer dem Verdeckkastendeckel 5 abgewandten Seite eine reibungsreduzierende Oberfläche 14 beispielsweise in Form einer Gleitfolie auf. Mittels einer umlaufenden Naht 15 ist das Kissen 13 fest mit dem Träger 7 verbunden und somit definiert gegenüber dem Verdeckkastendeckel 5 festgelegt.

Es ist weiterhin eine Textilschicht 17 vorgesehen, die hier mit einem Material wie die äußere Lage des Verdeckbezugs 20 ausgeführt ist und das Kissen 13 auf einer dem Träger 7 abgewandten Seite überspannt. Die Textilschicht 17 ist beidseits des Kissens 8 jeweils mit einer im Wesentlichen parallel zu einer Seitenfläche des Kissens 8 angeordneten Naht 24 bzw. 25 mit dem Träger 7 verbunden, wobei die Naht 24 zu der Naht 15 einen Abstand 26 und die Naht 25 zu der Naht 15 einen Abstand 27 aufweisen. Die Größe der Abstände 26, 27 beträgt wenige Zentimeter wie z. B. 2,5 cm.

Bei abgelegtem Verdeck 2 wird das Kissen 13 mit seiner glatten Oberfläche 14 gegen eine Innenseite 29 der Textilschicht 17 gedrückt, während eine Außenseite 30 der Textilschicht 17 gegen eine Oberfläche 31 des Verdeckbezug 20 gedrückt wird.

Durch die oben näher beschriebene Materialwahl liegt bei abgelegtem Verdeck 2 zwischen dem Kissen 13 bzw. dessen glatter Kunststoff-Oberfläche 14 und der Textilschicht 17 ein erheblich kleinerer Reibungskoeffizient als zwischen der aus Verdeckbezugsstoff gebildeten Textilschicht 17 und dem Verdeckbezug 20 vor.

Hierdurch ist sichergestellt, dass bei bei einer Fahrt auftretenden Relativbewegungen zwischen dem Verdeckkastendeckel 5 und dem abgelegten Verdeck 2 keine oder nahezu keine Bewegungen zwischen der Textilschicht 17 und dem Verdeckbezug 20 auftreten, sondern diese Relativbewegungen aufgrund der Abstände 26, 27 zwischen der Annähung der Textilschicht 17 und dem Kissen zwischen dem Kissen 13 und der Textilschicht 17 stattfinden. Abdrücke und Abnutzungserscheinungen des Verdeckbezugs 20 in den Bereichen, in denen der Verdeckbezug 20 bei abgelegtem Verdeck 2 mit dem Niederhalter 6 zusammenwirken, werden somit vermieden.

## Patentansprüche

1. Cabriolet-Fahrzeug (1) mit einem in einem hinteren Bereich des Cabriolet-Fahrzeugs (1) ablegbaren Verdeck (2) mit einem Verdeckbezug (20), das in vollständig geöffneter Stellung in einem Verdeckkasten (4) aufgenommen ist und hierbei von einem Verdeckkastendeckel (5) niedergehalten und in dieser niedergehaltenen Lage fixiert ist, wobei dem Verdeckkastendeckel (5) wenigstens ein auf das Verdeck (2) auflegbarer Niederhalter (6) zugeordnet ist,
**dadurch gekennzeichnet, dass** der Niederhalter (6) ein komprimierbares Kissen (13) aufweist, welches gegenüber dem Verdeckkastendeckel (5) definiert festlegbar ist und auf einer dem Verdeck (2) zugewandten Seite von einer Textilschicht (17) überspannt ist, welche verdeckkastendeckelseitig mit einem seitlichen Abstand (26, 27) zu dem Kissen (13) festgelegt ist, wobei zwischen dem Kissen (13) und der Textilschicht (17) ein geringerer Reibungskoeffizient als zwischen der Textilschicht (17) und dem Verdeckbezug (20) vorliegt.

2. Cabriolet-Fahrzeug nach Anspruch 1,
**dadurch gekennzeichnet, dass** die Textilschicht (17) an zwei gegenüberliegenden Seiten des Kissens (13) mit einem eine Relativbewegung zwischen dem Kissen (13) und der Textilschicht (17) ermöglichenden Abstand (25, 26), insbesondere von jeweils kleiner 5 cm, zu dem Kissen (13) verdeckkastendeckelseitig festlegbar ist.

3. Cabriolet-Fahrzeug nach einem der Ansprüche 1 oder 2,
**dadurch gekennzeichnet, dass** der Niederhalter (6) einen Träger (7) für das Kissen (13) und die Textilschicht (17), welche hieran befestigt sind, aufweist.

4. Cabriolet-Fahrzeug nach Anspruch 3,
**dadurch gekennzeichnet, dass** der Träger (7) mit textilem Gewebe ausgeführt ist.

5. Cabriolet-Fahrzeug nach einem der Ansprüche 3 oder 4,
**dadurch gekennzeichnet, dass** der Träger (7) reversibel, insbesondere mittels eines Klettverschlusses (8), an dem Verdeckkastendeckel (5) festlegbar ist.

6. Cabriolet-Fahrzeug nach einem der Ansprüche 3 bis 5,
**dadurch gekennzeichnet, dass** das Kissen (13) permanent, insbesondere mittels einer Naht (15), an dem Träger (7) befestigt ist.

7. Cabriolet-Fahrzeug nach einem der Ansprüche 3 bis 6,
**dadurch gekennzeichnet, dass** die Textilschicht (17) permanent, insbesondere mittels wenigstens einer Naht (24, 25), an dem Träger (7) befestigt ist.

8. Cabriolet-Fahrzeug nach einem der Ansprüche 1 bis 7,
**dadurch gekennzeichnet, dass** das Kissen (13) zumindest auf der der Textilschicht (17) zugewandten Seite eine reibungsreduzierende Oberfläche (14), insbesondere aus glattem Kunststoff, aufweist.

9. Cabriolet-Fahrzeug nach einem der Ansprüche 1 bis 8,
**dadurch gekennzeichnet, dass** die Textilschicht (17) und zumindest eine dieser zugewandte Seite des Verdeckbezugs (20) aus wenigstens annähernd dem gleichen Material gebildet sind.

10. Cabriolet-Fahrzeug nach einem der Ansprüche 1 bis 9,
**dadurch gekennzeichnet, dass** das Kissen (13) im abgelegten Zustand des Verdecks (2) gegenüber einem unbelasteten Zustand zusammengedrückt ist.

11. Cabriolet-Fahrzeug nach einem der Ansprüche 1 bis 10,
**dadurch gekennzeichnet, dass** ein in einem fahrzeugmittigen Bereich angeordneter Niederhalter (6) vorgesehen ist.

12. Cabriolet-Fahrzeug nach einem der Ansprüche 1 bis 11,
**dadurch gekennzeichnet, dass** wenigstens zwei in Fahrzeugquerrichtung voneinander beabstandet angeordnete Niederhalter (6) vorgesehen sind.

13. Cabriolet-Fahrzeug nach einem der Ansprüche 1 bis 11,
**dadurch gekennzeichnet, dass** ein sich im Wesentlichen über die gesamte Fahrzeugquerrichtung des Verdeckkastendeckels (5) erstreckender Niederhalter (6) vorgesehen ist.

## Claims

1. A convertible vehicle (1) comprising a hood (2) with a hood cover (20), which hood (20) can be stowed in a rear part of the convertible vehicle (1), and is accommodated in a hood compartment (4) in its fully opened position, and is held down here and fixed in this held-down position by a hood compartment lid (5), said hood compartment lid (5) having at least one hold-down element (6) assigned to it, which hold-down element (6) can be placed on the hood (2),
**characterised in that** the hold-down element (6) includes a compressible cushion (13) which can be fixed in a defined manner relative to the hood compartment lid (5) and is spanned by a textile layer (17) on a side facing the hood (2), which textile layer (17) is fixed on the side towards the hood compartment lid at a lateral distance (26, 27) from the cushion (13), wherein a coefficient of friction between the cushion (13) and the textile layer (17) is lower than between the textile layer (17) and the hood cover (20).

2. The convertible vehicle according to claim 1,
**characterised in that** the textile layer (17) can be fixed to the hood compartment lid on two opposite sides of the cushion (13) at a distance (25, 26) from the cushion (13), in particular of less than 5 cm in each case, enabling a relative movement between the cushion (13) and the textile layer (17).

3. The convertible vehicle according to any one of claims 1 or 2,
**characterised in that** the hold-down element (6) comprises a support (7) for the cushion (13) and the textile layer (17) which are attached thereto.

4. The convertible vehicle according to claim 3,
**characterised in that** the support (7) is made of textile fabric.

5. The convertible vehicle according to any one of claims 3 or 4,
**characterised in that** the support (7) can be fixed reversibly, in particular by means of a hook-and-loop fastener (8), to the hood compartment lid (5).

6. The convertible vehicle according to any one of claims 3 to 5,
**characterised in that** the cushion (13) is permanently fixed to the support (7), in particular by means of a seam (15).

7. The convertible vehicle according to any one of claims 3 to 6,
**characterised in that** the textile layer (17) is permanently fixed to the support (7), in particular by means of at least one seam (24, 25).

8. The convertible vehicle according to any one of claims 1 to 7,
**characterised in that** the cushion (13) has, at least on the side facing the textile layer (17), a friction-reducing surface (14), in particular made of smooth plastic.

9. The convertible vehicle according to any one of claims 1 to 8,
**characterised in that** the textile layer (17) and at least one side of the hood cover (20) facing it are made of at least approximately the same material.

10. The convertible vehicle according to any one of claims 1 to 9,
**characterised in that** the cushion (13) is compressed relative to an unloaded state when the hood (2) is in the stored state.

11. The convertible vehicle according to any one of claims 1 to 10,
**characterised in that** a hold-down element (6) arranged in a central region of the vehicle is provided.

12. The convertible vehicle according to any one of claims 1 to 11,
**characterised in that** at least two hold-down elements (6) arranged at a distance from one another in the transverse direction of the vehicle are provided.

13. The convertible vehicle according to any one of claims 1 to 11,
**characterised in that** a hold-down element (6) is provided which extends essentially over the entire transverse vehicle direction of the hood compartment lid (5).

## Revendications

1. Véhicule cabriolet (1) comportant une capote (2) qui peut être déposée dans une zone arrière du véhicule cabriolet (1), ladite capote (2) comportant un recouvrement de capote (20) et étant logée, en position complètement ouverte, dans un compartiment de capote (4), en quel cas elle est retenue par un couvercle de compartiment de capote (5) et est fixée dans cette position retenue, au moins un organe de retenue (6), qui peut être placée sur la capote (2), étant attribué au couvercle de compartiment de capote (5),
**caractérisé en ce que** l'organe de retenue (6) présente un coussin compressible (13) qui peut être fixé d'une manière définie par rapport au couvercle de compartiment de capote (5) et est recouvert d'une couche textile (17) sur un côté tourné vers la capote (2), qui est fixée, du côté du couvercle de compartiment de capote, à une distance latérale (26, 27) du coussin (13), un coefficient de frottement inférieur étant présent entre le coussin (13) et la couche textile (17) qu'entre la couche textile (17) et le recouvrement de capote (20).

2. Véhicule cabriolet selon la revendication 1,
**caractérisé en ce que** la couche textile (17) peut être fixée, du côté du couvercle de compartiment de capote, sur deux côtés opposés du coussin (13) à une distance (25, 26) du coussin (13), notamment inférieure à 5 cm à chaque fois, permettant un mouvement relatif entre le coussin (13) et la couche textile (17).

3. Véhicule cabriolet selon l'une quelconque des revendications 1 ou 2,
**caractérisé en ce que** l'organe de retenue (6) comprend un support (7) pour le coussin (13) et la couche textile (17) fixés à celui-ci.

4. Véhicule cabriolet selon la revendication 3,
**caractérisé en ce que** le support (7) est réalisé en tissu textile.

5. Véhicule cabriolet selon l'une quelconque des revendications 3 ou 4,
**caractérisé en ce que** le support (7) peut être fixé de manière réversible, notamment au moyen d'une fermeture autoaggrippante (8), sur le couvercle de compartiment de capote (5).

6. Véhicule cabriolet selon l'une quelconque des revendications 3 à 5,
**caractérisé en ce que** le coussin (13) est fixé de manière permanente sur le support (7), notamment au moyen d'une couture (15).

7. Véhicule cabriolet selon l'une quelconque des revendications 3 à 6,
**caractérisé en ce que** la couche textile (17) est fixée de manière permanente sur le support (7), notamment au moyen d'au moins une couture (24, 25).

8. Véhicule cabriolet selon l'une quelconque des revendications 1 à 7,
**caractérisé en ce que** le coussin (13) présente, au moins du côté tourné vers la couche textile (17), une surface (14) réduisant le frottement, notamment en matière plastique lisse.

9. Véhicule cabriolet selon l'une quelconque des revendications 1 à 8,
**caractérisé en ce que** la couche textile (17) et au moins un côté du recouvrement de capote (20) faisant face à celle-ci sont formés d'au moins approximativement le même matériau.

10. Véhicule cabriolet selon l'une quelconque des revendications 1 à 9,
**caractérisé en ce que** le coussin (13) est comprimé par rapport à un état non chargé lorsque la capote (2) est à l'état déposé.

11. Véhicule cabriolet selon l'une quelconque des revendications 1 à 10,
**caractérisé en ce qu'**un organe de retenue (6) agencé dans une région centrale du véhicule est prévu.

12. Véhicule cabriolet selon l'une quelconque des revendications 1 à 11,
**caractérisé en ce qu'**au moins deux organes de retenue (6) espacés l'un de l'autre dans la direction transversale du véhicule sont prévus.

13. Véhicule cabriolet selon l'une quelconque des revendications 1 à 11,
**caractérisé en ce qu'**un organe de retenue (6) s'étendant sensiblement sur toute la direction transversale du véhicule du couvercle de compartiment de capote (5) est prévu.
